(19) Europäisches Patentamt
European Patent Office
Office européen des brevets

(11) **EP 2 146 197 A1**

(12) **EUROPEAN PATENT APPLICATION**

(43) Date of publication:
**20.01.2010 Bulletin 2010/03**

(51) Int Cl.:
**G01N 21/53** *(2006.01)*

(21) Application number: **09150751.7**

(22) Date of filing: **16.01.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **17.07.2008 EP 08160617**

(71) Applicant: **Nederlandse Organisatie voor toegepast-natuurwetenschappelijk onderzoek TNO**
**2628 VK Delft (NL)**

(72) Inventor: **Kusmierczyk-Michulec, Jolanta Teresa**
**2592 CX Den Haag (NL)**

(74) Representative: **Hatzmann, Martin**
**Vereenigde**
**Johan de Wittlaan 7**
**2517 JR Den Haag (NL)**

(54) **A method for determination of aerosol type in an atmospheric mixture**

(57) The invention relates to a method for determination of atmospheric aerosol type in an atmospheric aerosol mixture, comprising the steps of: receiving results of spectral optical measurements of an aerosol mixture conceived to be identified; determining a value of the Ångström coefficient based on the results of the spectral optical measurements; calculating respective contributions of components in the aerosol mixture based on the Ångström coefficient and pre-calculated data thereby identifying an atmospheric aerosol mixture; calculating effective radius of the identified atmospheric aerosol mixture; verifying determined components of the aerosol mixture and estimation of their contribution using effective radius and Ångström coefficient.

Fig. 8

**Description**

FIELD

The invention relates to a method for determination of aerosol type in an atmospheric mixture.

BACKGROUND OF THE INVENTION

The physical and optical properties of an atmospheric aerosol mixture depend on many factors. An increase or decrease in the relative humidity has an influence on the size of hydroscopic particles and finally on the effective radius of an aerosol mixture. In consequence, values of the aerosol extinction, the aerosol optical thickness and the Ångström coefficient (known also as the Ångström exponent or the Ångström parameter) are modified. Similar effect can be observed when the aerosol composition changes. An increased contribution of small aerosol particles causes that the effective radius of an aerosol mixture decreases and the Ångström coefficient increases.

SUMMARY OF THE INVENTION

It is an object of the invention to provide a reliable method of identifying aerosol types in an atmospheric mixture.
To this end the method according to the invention comprises the steps of:

-   receiving results of spectral optical measurements of an aerosol mixture conceived to be identified;
-   determining a value of the Ångström coefficient based on the results of the spectral optical measurements;
-   calculating respective contributions of components in the aerosol mixture based on the Ångström coefficient and pre-calculated data thereby identifying an atmospheric aerosol mixture;
-   calculating effective radius of the identified atmospheric aerosol mixture;
-   verifying determined components of the aerosol mixture and estimation of their contribution using effective radius and Ångström coefficient.

In a particular embodiment the method according to the invention the spectral measurements comprise measurements of aerosol extinction or aerosol optical thickness.
In a further particular embodiment of the method according to the invention, the pre-calculated data comprise values of the extinction coefficient, said values of the extinction coefficient being determined as functions of wavelengths, refractive indices and size distribution parameters.
According to a further aspect of the invention the method further comprises the step of measuring relative humidity. Preferably, in this case the pre-calculated data are determined as functions of wavelengths, refractive indices and size distribution parameters and relative humidity.
Technical measure of the invention is based on the following insights. The ambient relative humidity changes the optical properties of hygroscopic atmospheric aerosols like, for example, sea-salts. The wetting process affects the particle sizes, the aerosol scattering properties and finally the aerosol extinction coefficients and the aerosol optical thickness. Since the ambient aerosols are far from being single component, it may be important to understand how the relative humidity may influence the optical properties of the natural aerosol mixtures which can contain both soluble and insoluble components.
When the ambient relative humidity is changing the hygroscopic atmospheric aerosols undergo processes of phase transformation, droplet growth, and evaporation. The phase transformation from a solid particle to a saline droplet usually occurs spontaneously when the ambient relative humidity reaches a level called the deliquescence humidity. Its value is specific to the chemical composition of the aerosol particle. To model the droplet growth the information about water activity and density as a function of solute concentration is needed. A technique called single-particle levitation technique allows to measure these parameters properly (Tang, I.N. and H.R. Munkelwitz, 1994, Water activities, densities, and refractive indices of aqueous sulfates and sodium nitrate droplets of atmospheric importance, J. Geophys. Res., 99, D9, 18801-18808). The results of the laboratory study on the changes of optical properties of single salt and mixed salt aerosols cased by the wetting process have been presented in the articles by Tang, I., 1996, Chemical and size effects of hygroscopic aerosols on light scattering coefficients, J. Geophys. Res., 101, D14, 19245-19250 and Tang, I.N. and H.R. Munkelwitz, 1994, Water activities, densities, and refractive indices of aqueous sulfates and sodium nitrate droplets of atmospheric importance, J. Geophys. Res., 99, D9, 18801-18808. It is found to be advantageous to apply these results to atmospheric aerosols which can contain both soluble and insoluble particles.
It is further found that in the natural environment an increase or a decrease in the aerosol extinction value observed at a given wavelength may be seen as a signal that measuring conditions have changed. An increase in the aerosol optical thickness or aerosol extinction can be either related to an increase in the relative humidity (RH) or to a change in the aerosol concentration. Quite often both factors are present. Optical measurements at one single wavelength will not resolve the question whether the observed change is caused only by the increased humidity or maybe the additional aerosol particles contributed to the measured aerosol extinction or aerosol optical thickness. To be able to retrieve more accurate information about the aerosol mixture the spectral measurements may be needed. The more spectral information is available, the greater is the chance to get more realistic indication of aerosol composition in a mixture.

The variation of the extinction coefficient or the aerosol optical thickness with the wavelength can be presented as a power law function with a constant (related to the power factor) known as the Ångström coefficient (Ångström, A.: On the atmospheric transmission of sun radiation and on dust in the air. Geogr. Ann., 11, 156-166, 1929). When the particle size distribution is dominated by small particles, usually associated with pollution, the Ångström coefficients are high; in clear conditions they are usually low. Kusmierczyk-Michulec and Van Eijk (2007) demonstrated that the Ångström coefficient can be used as a tracer of the continental aerosols. However, this work did not consider aerosol mixtures.

It will be appreciated that atmospheric changes may be approximated by a simple model, or by a reasonably sophisticated model. In the first case it is assumed that the amount of aerosols is fixed and all changes in the optical properties of atmospheric aerosol mixtures can be attributed to the growth of hygroscopic aerosols. In the second case, a change the contribution of aerosol components is used to attribute influences of aerosol composition on the aerosol optical thickness and the Ångström coefficient.

The insights of the method according to the invention are based on the following theory.

Aerosol size distribution can be represented by the number size distribution $N(r)$, the volume size distribution $V(r)$, or by the mass size distribution $m(r)$. In each case the lognormal function may be used and details are presented e.g. by Seinfeld, J.H., and S. N. Pandis, 1998, Atmospheric Chemistry and Physics; from Air Pollution to Climate Change, John Wiley and Sons, pp. 1326.

The aerosol number size distribution for a given aerosol type can be presented by the following equation, where $r$ is the particle radius, $r_n$ is the median radius and $\sigma$ is the standard deviation:

$$N(r) = \frac{N_n}{r\sigma\sqrt{2\pi}} \exp\left\{-\frac{(\ln r - \ln r_n)^2}{2\sigma^2}\right\} \tag{1}$$

The alternative representation is the volume size distribution, with the volume median radius $r_v$ and the standard deviation $\sigma$:

$$V(r) = \frac{C_v}{r\sigma\sqrt{2\pi}} \exp\left\{-\frac{(\ln r - \ln r_v)^2}{2\sigma^2}\right\} \tag{2}$$

where $C_v$ and $N_n$ are particle concentration for the volume and number size distribution, respectively. Transformation from the number size distribution to the volume size distribution can be readily carried out by a skilled artisan.

The volume concentration $C_v$ ($\mu m^3/\mu m^2$) is defined as:

$$C_v = \int_{r_{min}}^{r_{max}} \frac{dV(r)}{d\ln r} d\ln r \tag{3}$$

The relation between the volume concentration and the number concentration is given by the following equation:

$$C_v = \tfrac{4}{3}\pi N_n \exp(\tfrac{9}{2}\sigma^2) r_n^3 \tag{4}$$

Transformation from the volume median radius to the number median radius is given by the following relation:

$$\ln r_v = \ln r_n + 3\sigma^2 \tag{5}$$

One of the very useful parameters that can be derived directly from the number size distribution is called an effective radius $R_{eff}$:

$$R_{eff} = \frac{\int r^3 \frac{dN}{dr} dr}{\int r^2 \frac{dN}{dr} dr} \tag{6}$$

According to the invention, it is found to be advantageous to use the effective radius to characterize aerosol mixtures.

The spectral optical coefficient, called the extinction coefficient ext $(\lambda)$ (in km$^{-1}$) can be calculated from the number size distribution:

$$ext(\lambda) = \pi \int_{r_{min}}^{r_{max}} r^2 Q_{ext} \frac{dN(r)}{d\ln r} d\ln r \tag{7}$$

or alternatively from the volume size distribution:

$$ext(\lambda) = \frac{3}{4} \int_{r_{min}}^{r_{max}} \frac{1}{r} Q_{ext} \frac{dV(r)}{d\ln r} d\ln r \tag{8}$$

where $\lambda$ is wavelength, r is radius and $Q_{ex}$ is the extinction efficiency factor, being a function of the complex index of refraction. The coefficient $Q_{ex}$ may be calculated according to algorithm published by Bohren, C.F., and D.R.Huffman, Absorption and Scattering of Light by Small Particles, 550 pp., John Wiley, New York, 1983.

The extinction coefficient integrated over the whole column of atmosphere is a dimensionless parameter and it is called the aerosol optical thickness ($\tau_a$):

$$\tau_a(\lambda) = \int_{H_{min}}^{H_{max}} ext(\lambda, h) dh \approx \int_{H_{min}}^{H_{max}} ext(\lambda) f(h) dh \tag{9}$$

where f(h) represents the vertical distribution of aerosols, h is the altitude in km, $H_{min}$ and $H_{max}$ are the lower and the upper altitude, respectively, at which a given aerosol type can be found.

The atmosphere can be modeled as superposition of three layers: boundary layer (BL), free troposphere and stratosphere. It may further be assumed that within each layer the aerosol composition is constant with height. As a rough estimate, the BL is often assumed to have a depth of 2km.

Variation of the extinction coefficient with the wavelength can be presented in the form of a power law function:

$$ext(\lambda) = \gamma_c \lambda^{-\alpha} \tag{10}$$

The same type of relation is also valid for the aerosol optical thickness,

$$\tau_a(\lambda) = \gamma_\tau \lambda^{-\alpha} \tag{11}$$

where $Y_c$ and $Y_\tau$ are constant and $\alpha$ is the Ångström coefficient (also known as Ångström exponent or Ångström parameter). Usually, this parameter is determined in the spectral range from 440 nm to 870 nm.

Change in the relative humidity values causes changes in the size distribution of hygroscopic aerosols like sea-salts (NaCl) and anthropogenic salts e.g. ammonium nitrate ($NH_4NO_3$) and ammonium sulphate (($NH_4)_2SO_4$). In this paper it is assumed, similarly like in McClatchey et al. (1984) that black carbon (BC) is not soluble. Despite the fact that about 40% of organic carbon (OC) is soluble (Rullean, 2000, personal communication), for simplicity and transparency of the calculation, it is assumed that OC is also not hygroscopic.

Increase of a particle radius caused by an increase of humidity may be determined as follows:

$$r_{RH} = r_{dry}\left(\frac{100}{x_{RH}}\frac{\rho_{dry}}{\rho_{RH}}\right)^{1/3} \tag{12}$$

where $r_{RH}$ and $r_{dry}$ are the radius of a wet and dry particle, respectively. Similarly, $\rho_{RH}$, and $\rho_{dry}$, are densities of a wet and dry aerosols. The parameter $x_{RH}$ is the solute weight percent and it can be expressed as a function of water activity *aw*, or simply as a function of relative humidity RH:

$$x_{RH} = \sum_i A_{xi} aw^i = \sum_i A_{xi}\left(\tfrac{RH}{100}\right)^i \tag{13}$$

Changes in the aerosol density caused by changes in the relative humidity are described by:

$$\rho_{RH} = 0.9971 + \sum_i A_{\rho_i} x_{RH}^i \tag{14}$$

The values of the coefficients $A_{xi}$ and $A_{\rho i}$ for different salts are known per se.

It is further found that changes in the aerosol size distributions may cause changes in the related aerosol optical properties.

The optical properties of the aerosol mixture can be represented by the aerosol extinction (see eq. 7) or by the aerosol optical thickness (see eq. 9). Both parameters can be modeled using the external mixing approach. It means that each aerosol component of a given natural aerosol mixture is represented by a different substance with its own single mode size distribution and single complex index of refraction. The spectral values of the aerosol extinction for a given aerosol component can be calculated using eq.7 or eq.8 and aerosol size distributions from suitable publications. It is further found that the aerosol optical thickness values may be obtained as appropriate weighted averages of the extinction coefficients using the volume percentages.

Taking into account that some of aerosol components are hygroscopic, the general equation for the aerosol optical thickness of the natural mixture can be presented as:

$$\tau_a(\lambda, RH) = \sum_{j=1}^{4} C_{V,tot}^j(RH) * \frac{ext^j(\lambda, RH)}{C_V^j(RH)} = \sum_{j=1}^{4} C_{V,tot}^j(RH) * \tau^j(\lambda, RH) \tag{15}$$

where *j=1,..,4* symbolizes the aerosol components: SSA, WS, OC and BC, $C_v$ is given by eq. 4 and $C_{V,tot}^j$ is a parameter which determines the volume percentage contribution of a *j-th* aerosol component to the total volume $C_{v,tot}$ (see Appendix

2). The number of aerosol components included in a mixture does not exceed four.

In order to generalize on the influence of the relative humidity on the optical properties of the aerosol mixtures containing fixed number of particules the following is taken into account.

In a pure maritime environment the observed aerosol types are sea-salts. However, such an ideal situation takes place only in a remote area, over Open Ocean. In all other places usually some addition of anthropogenic salts can be found. Both types of salts are hygroscopic. Increase or decrease in relative humidity may cause changes in the particles sizes, their volumes, densities and finally in the aerosol optical thickness values. The only parameter independent of relative humidity is the number of particles.

It is found that independently of the size distribution the extinction values increase significantly especially for RH values higher than 80% for sea-salts, $ext^{SSA}(\lambda, RH)$. The simulations are presented for three aerosol types: SSA1, SSA3 and SSA5 and two wavelengths 412 and 865 nm. Increase in the relative humidity values leads to an increase in $C_v$ values and effects the resultant ratio (here index $j$ is replaced by a symbol SSA, see eq.15):

$$\tau^{SSA}(\lambda, RH) = ext^{SSA}(\lambda, RH) / C_V^{SSA}(RH) \qquad (16)$$

The sea-salt optical thickness values normalized to their values at RH=40% demonstrate a general pattern, observed also for other size distributions. It can be described by the following equation in which index $k$ represents one of six sea-salt components (i.e. $SSA_k$ with $k=1,..,6$):

$$\tau^{SSA_k}(\lambda, RH) = \tau^{SSA_k}(\lambda, RH_{40}) * \sum_{i=0}^{4} B_{\lambda,i}^{SSA} * aw^i \qquad (17)$$

The coefficients for three selected wavelengths: 412, 555 and 865 can be found from pre-calculated data.

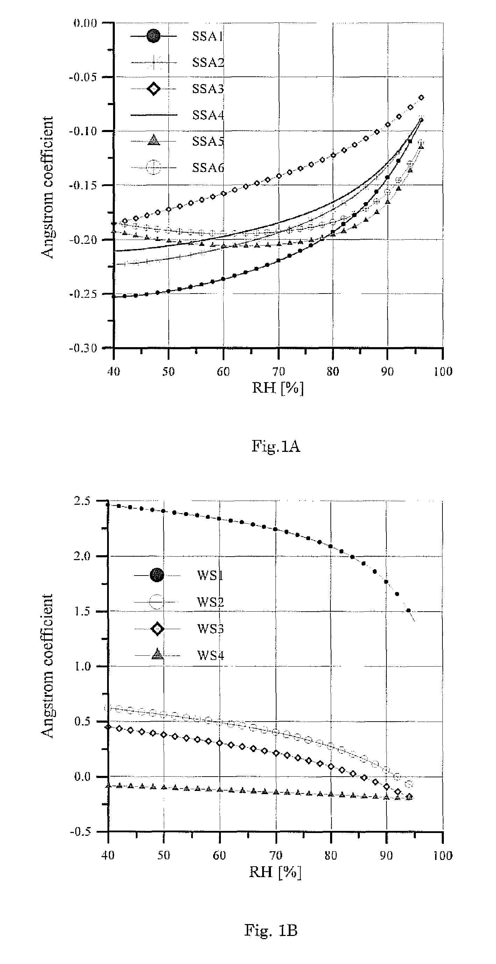

It is further found that the wetting process causes that the aerosol optical thickness values $\tau_a$ increase significantly, especially for RH larger than 90%, reaching at 98% up to 6 times of their value at RH=80%. This effect is observed at both studied wavelengths, however for higher values of RH, an increase in the aerosol optical thickness values is more evident at 412 nm than at 865 nm. It is further found that the Ångström coefficient also becomes a function of relative humidity. More details on this dependency will be discussed with reference to Figure 1A.

The same type of simulation as for sea-salts was also repeated for the anthropogenic salts. Changes in the aerosol optical properties can be described by the following equation:

$$\tau^{WS_l}(\lambda, RH) = \tau^{WS_l}(\lambda, RH_{40}) * \sum_{i=0}^{5} B_{\lambda,i}^{WS_l} * aw^i \qquad (18)$$

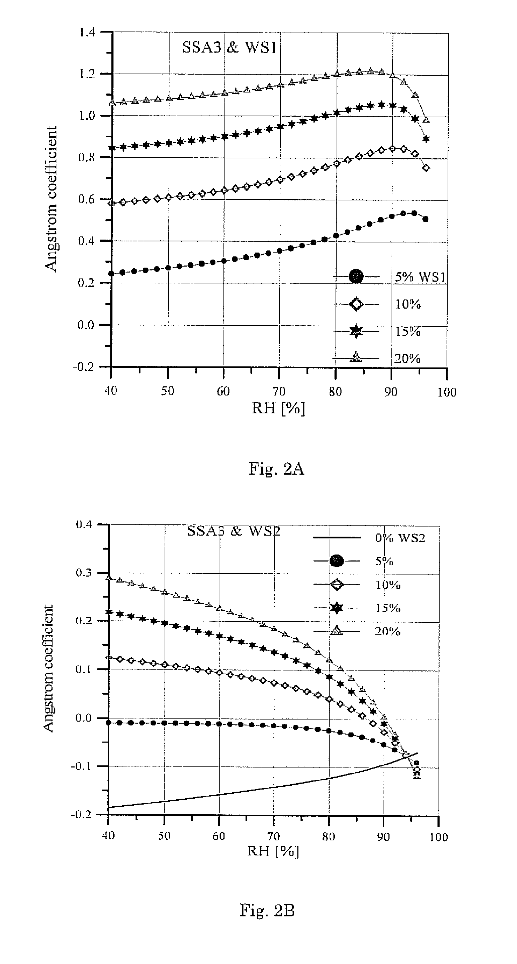

where the coefficients $B_{\lambda,i}^{WS_l}$ and $\tau^{WS_l}(\lambda, RH_{40})$ may be found in pre-calculated data. Index $l=1,..,4$ corresponds to four possible WS aerosol types). Results of such simulation are presented in Figures 2A, 2B.

In the maritime environment, the observed aerosol type is usually a mixture of sea-salts and anthropogenic salts. Sometimes such a natural mixture contains also some contribution of the organic carbon or black carbon. Two last aerosol components are assumed to be insoluble. It is found that it may be advantageous to take an ambient parameter, like humidity into account when identifying aerosols in a mixture.

It is, finally, concluded that changes in the Ångström coefficient values can be related to the changes in the effective radius of a mixture. An increased contribution of small aerosol particles causes that the effective radius decreases and the Ångström coefficient increases. An increase in the relative humidity influences the size of the hydroscopic particles and consequently the effective radius of an aerosol mixture. For example, in a mixture comprising particles WS1 and WS2, particles of WS1 being much smaller than WS2. As a result, effective radius of the mixture i.e. SSA3&WS2 is larger than the first one (SSA3&WS1). Both mixtures are hygroscopic and the relative humidity has a similar influence on the effective radius of a mixture and pure sea-salts. Therefore the ratio between both parameters will be nearly constant.

A different situation is in case of OC which is insoluble. Particles of OC are small and the effective radius of a mixture will be much smaller than for the pure sea-salts. On the other hand with an increase of relative humidity the sea-salts particles increase. Hence, the slight increase of the effective radius with RH. The different behavior represents black carbon. Particles are so small that they do not change the effective radius of a mixture. On the other hand even a small addition of black carbon particles will change the Ångström coefficient values. This can be explained in terms of the strong absorbing properties of black carbon.

Next, it modification in the aerosol composition and its influence on the optical thickness has been studied. Simulations have been performed to study this phenomenen for RH values within the range from 40% to 96%.

When the aerosol mixture is composed of sea-salts SSA and anthropogenic salts WS, changes in the contribution of the last component $C_{V,tot}^{WS}$ cause that the resultant aerosol optical thickness, given by equation 15, also changes. For example, an anthropogenic salt WS1 may gradually replace an amount of sea-salt. Since anthropogenic salts have much smaller sizes than sea-salt particles, effectively the number of particles in this particular mixture increases and the resultant volume decreases. As a result the Ångström coefficient increases. It has been found that for the aerosol component, like WS2, the maximum Ångström coefficient value does not exceed 0.6 for RH=40% and 0.3 for RH=80%. For the same values of relative humidity, but for a different aerosol component WS1, it is found that the maximum value of the Ångström coefficient is a few times larger, reaching the value of 2.4 and 2, respectively.

In addition, a situation has been studied when in a two-component mixture the hygroscopic salts WS is substituted by insoluble organic carbon OC1. It was found that an increase of the OC contribution up to 20% produces a similar result as for WS1 particles. The Ångström coefficient gradually increases from the values characteristic for a given pure sea-salt type to the values between 0.6 and 1.2 depending on the RH values. Further it was found that increase of the OC contribution leads to the faster increase of the Ångström coefficient values with their maximum values around 3. Theses mutual relations can be reliably explained in terms of changes in the effective radius of a mixture.

For two components aerosol mixture, for example sea-salts and OC or sea-salts and WS, the aerosol optical thickness at a given value of RH is defined by equation 15. For a kind of mixture, described above, changes in the Ångström coefficient values can be described by the equation:

$$\alpha_{mix}(RH) = \alpha^{SSA}(RH) - \frac{1}{\ln(\frac{\lambda_1}{\lambda_2})} \left\{ \ln\left[1 + \frac{y^{ad}}{\xi}(\frac{\lambda_1}{\lambda_2})^{-\alpha^{mix}}\right] - \ln(1 + \frac{y^{ad}}{\xi}) \right\} \qquad (19)$$

where $\lambda_1$=412 nm, $\lambda_2$=865 nm and $\xi = \frac{100-x1}{x1}$ The parameter x1 represents a percentage contribution of a second aerosol component added to a mixture and it is a number between 1 and 100. If x1 is equal 0, then the aerosol mixture is composed of pure sea-salts and the Ångström coefficient is given by the eq.24.

Parameters $y^{ad}$ and $\alpha^{mix}$ for the mixture composed of SSA and WS are defined by the following relations:

$$y^{ad} = \frac{\tau^{WS}(\lambda_2, RH)}{\tau^{SSA}(\lambda_2, RH)}, \qquad (20)$$

$$\alpha^{mix} = \alpha^{WS} - \alpha^{SSA} \qquad (21)$$

These parameters for the mixture composed of SSA and OC are determined by the relations.

$$y^{ad} = \frac{\tau^{OC}(\lambda_2)}{\tau^{SSA}(\lambda_2, RH)} \qquad (22)$$

$$\alpha^{mix} = \alpha^{OC} - \alpha^{SSA} \qquad\qquad (23)$$

The equation 19 is a consequence of equations 15 and 11. The equation 19 describes the transition from one aerosol type to the other and related to that process a modification of the Ångström coefficient values.

Next, a more sophisticated situation has been studied. It will be appreciated that if a mixture is composed of more than two aerosol components it becomes more difficult to investigate all changes that lead to modification of the Ångström coefficient values.

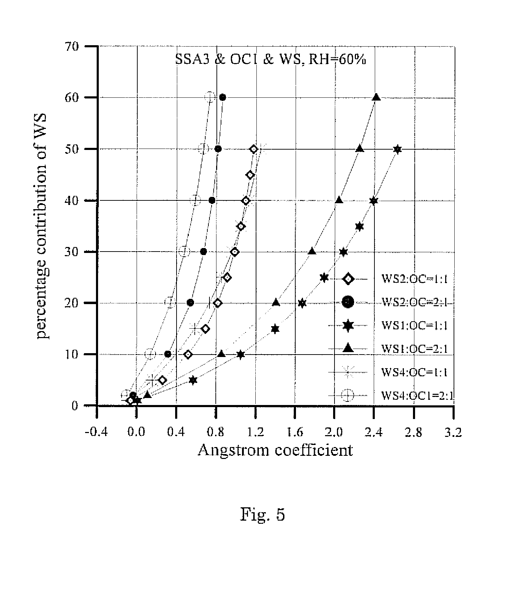

For example, in a mixture may comprise SSA and two other components like WS and OC. To simplify this complex situation let's assume that the mutual relations between WS and OC (WS:OC) are limited only to two cases: 1:1 and 2:1. It means that in the first situation the amounts of WS and OC are equal, in the second case for each portion of OC is taken a doubled portion of WS. This situation will be discussed with reference to Figure 5.

Concluding, it is found that spectral optical measurements are required. In case when optical measurements of an aerosol extinction or the aerosol optical thickness are carried out at one single wavelength, results will not give the accurate information about the aerosol mixture. If the spectral measurements are available they provide an additional parameter, the Ångström coefficient. Therefore, in real situation the Ångström coefficient is capable of indicating the probable aerosol type for a given mixture.

It will be appreciated that the Ångström coefficient may be used for providing a preliminary result on the aerosol contributions in a mixture, for example using multiple regression method. For example, use may be made of formula's presented above. In this way aerosol contributions are determined from the optical measurements, after which expected optical measurements are calculated from the results, after which the procedure is repeated again. As a result, for example, pursuant to reaching a pre-determined fit error, the components of the mixture are indicated. Alternatively, it is possible to associate the possible aerosol mixture selected by the regression algorithm with aerosol type. In that respect the Ångström coefficient indicates the atmospheric aerosol types.

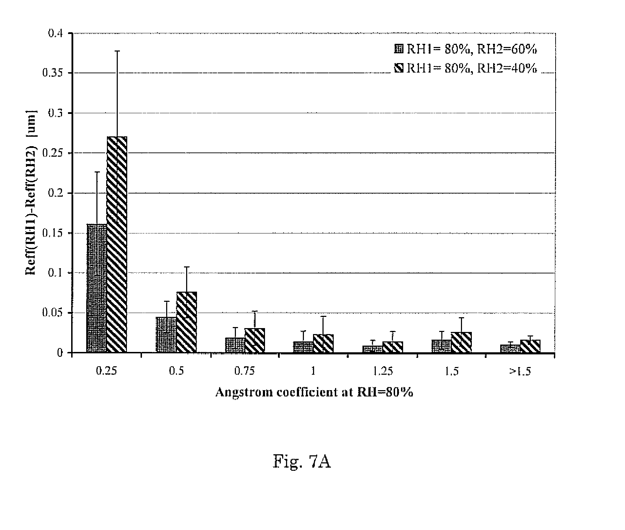

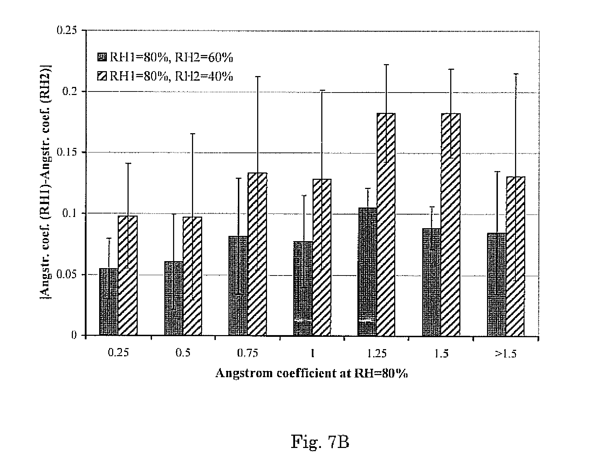

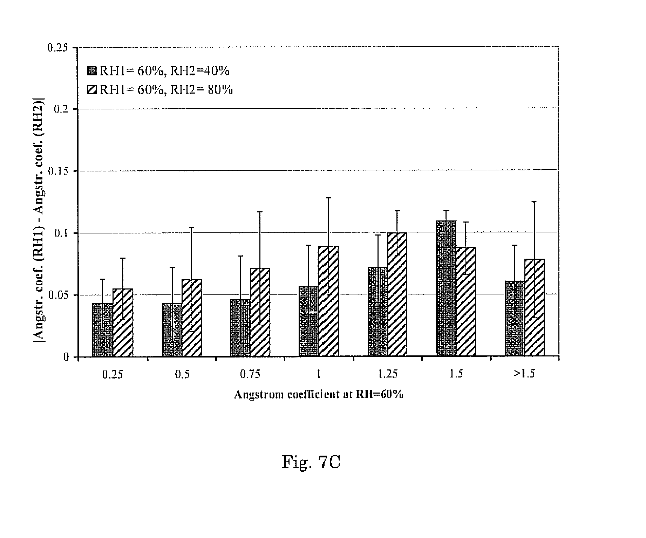

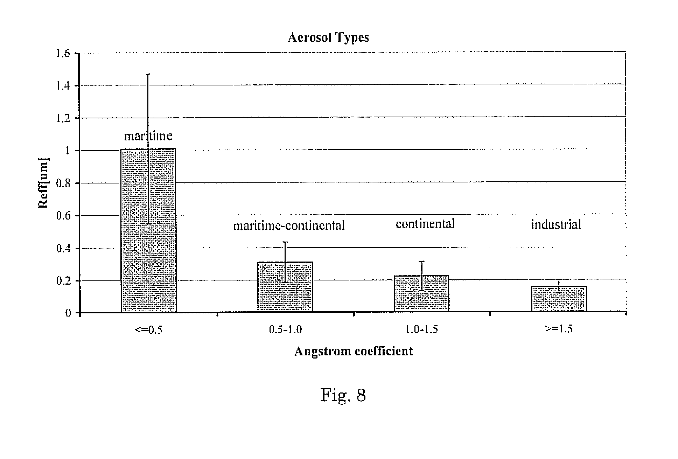

When the atmospheric conditions are changing and the relative humidity increases or decreases the measured aerosol optical thickness/extinction is also modified. The effective radius of a mixture is modified and in consequence the Ångström coefficient as well. According to the invention, it is found that these changes can be quantified. This will be discussed in more detail with reference to Figures 7 and 8.

These and other aspects of the invention will be discussed in more detail with reference to drawings.

BRIEF DESCRIPTION OF THE DRAWINGS

Figure 1A shows the Ångström coefficient as a function of relative humidity (RH).
Figure 1B presents the Ångström coefficients values as a function of relative humidity for four different anthropogenic salt distributions.
Figure 2A and 2B show the variation of the Ångström coefficient values for 4 different mixtures composed of SSA3 and ammonium hydrogen sulphate WS1 (Fig. 2A) and WS2 (Fig. 2B).
Figure 3A and 3B demonstrate schematically changes in the size distribution of the aerosol mixture.
Figure 4A presents the Ångström coefficient values for a mixture composed of SSA3 and OC1.
Figure 4B shows the difference between the Ångström coefficient values for SSA3 and OC1 and SSA3 and OC2 mixtures.
Figures 5 illustrates the changes in the Ångström coefficient values caused by changes in the composition of the aerosol mixture for relative humidity: RH=60%.
Figure 6A and 6B demonstrate changes of the Ångström coefficient values versus the effective radius for different ambient humidity.
Figure 7A, 7B and 7C demonstrates examples of effective radius and Ångström coefficient values.
Figure 8 presents schematically an embodiment of results of the method according to the invention.

DETAILED DESCRIPTION OF THE DRAWINGS

Figure 1A shows the Ångström coefficient as a function of RH. Each of 6 curves represents a different size distribution indicated by symbols: SSA (1 to 6). The increase in the relative humidity causes the changes in the Ångström coefficients which depend on the aerosol size distribution. Unlike the curves SSA5 and SSA6, the curves SSA1, SSA2, SSA3 and SSA4 clearly increase with RH. It can be noticed, that the upper threshold value does not exceed -0.05. Because of some similarities between curves, instead of analyzing 6 size distributions it is enough to investigate only 3 of them, indicated by symbols: SSA1, SSA3 and SSA5. They represent the lower, the middle and the upper curve, respectively. The lower curve (SSA1) corresponds to the narrowest of all size distributions ($\sigma$=0.51). The middle curve (SSA3) represents the size distribution characterized by much smaller value of the dry median radius than other salts. The upper curve (SSA3) represents the size distribution with the largest dry median radius. For all sea-salt types the changes in the Ångström coefficient values caused by an increase in the relative humidity can be described by the 5$^{th}$ order of polynomial function:

$$\alpha^{SSA_k}(RH) = \sum_{i=0}^{5} B_{\alpha,i}^{SSA_k} * aw^i \qquad (24)$$

The coefficients $B_{\alpha,i}^{SSA_k}$ for six sea-salt types indicated by index $k$ ($k$=1,..,6,) may be seen as pre-calculated data.

Figure 1B presents the Ångström coefficients values as a function of relative humidity for two size distributions of $NH_4HSO_4$, represented by symbols WS1 and WS2, one distribution of ammonium nitrate $NH_4NO_3$, indicated by symbol WS3 and one distribution of ammonium sulphate $(NH_4)_2SO_4$ denoted by WS4. The influence of RH on the Ångström coefficient values is more significant than in case of sea-salts. It is interesting to notice that curves representing salts WS2, WS3 and WS4 are clearly separated from the curve representing WS1. The first group of curves is located in the bottom part of graph and do not exceed the threshold value of 0.6. On the contrary the curve for WS1 is located in the upper part of the graph and the threshold value is almost 4 times higher than for other salts. This effect can be explained by a significant difference in the size distributions. The WS1 size distribution is narrower and characterized by the dry median radius which is twice smaller than for other salts. In all cases the same behavior is observed: the dryer aerosols the higher values of the Ångström coefficient. More wet conditions cause a growth of the anthropogenic salt particles and a decrease of the Ångström coefficient values. All changes can be described by the equation:

$$\alpha^{WS_l}(RH) = \sum_{i=0}^{5} B_{\alpha,i}^{WS_l} * aw^i \qquad (25)$$

where the coefficients may be pre-calculated as pre-calculated data.

Figure 2 shows the variation of the Ångström coefficient values for 4 different mixtures composed of SSA3 and ammonium hydrogen sulphate WS1 (Fig. 2A) and WS2 (Fig. 2B). Each curve represents a mixture with a different percentage contribution of anthropogenic salt which varies from 5% to 20%. Both plots reveal that adding small amount of anthropogenic salts causes that the optical properties of the aerosol mixture differ significantly from the pure sea salt. The Ångström coefficient is much higher than for the pure sea-salt components. Both graphs show also that the same Ångström coefficient value may correspond to a different percentage contribution of WS depending on its initial size distribution parameters, e.g. $\alpha$=0.265 at RH=48% may represent either a mixture of sea-salts and 20% of WS2 or a mixture of sea-salts and 5% of WS1.

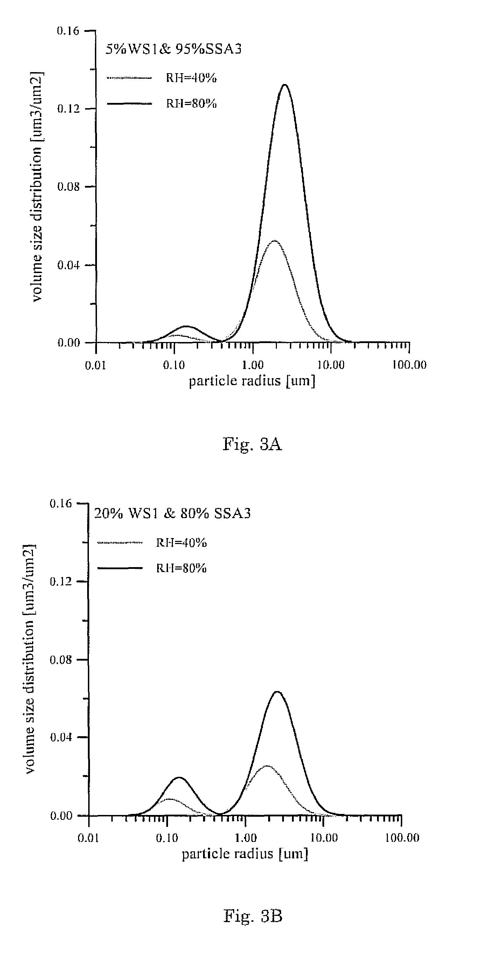

The changes in the size distribution of the aerosol mixture are demonstrated in Figure 3A and 3B. Double increase of relative humidity causes that both volume concentration of fine particles (WS1), as well as, coarse particles (SSA3) are almost doubled, i.e. $C_v^{WS1}(RH_{80})/C_v^{WS1}(RH_{40}) \approx 2.3$, and $C_v^{SSA3}(RH_{80})/C_v^{SSA3}(RH_{40}) \approx 2.5$

On the other hand, for the same value of relative humidity, similar effect can be observed when the percentage contribution of one aerosol compound in the aerosol mixture increases.

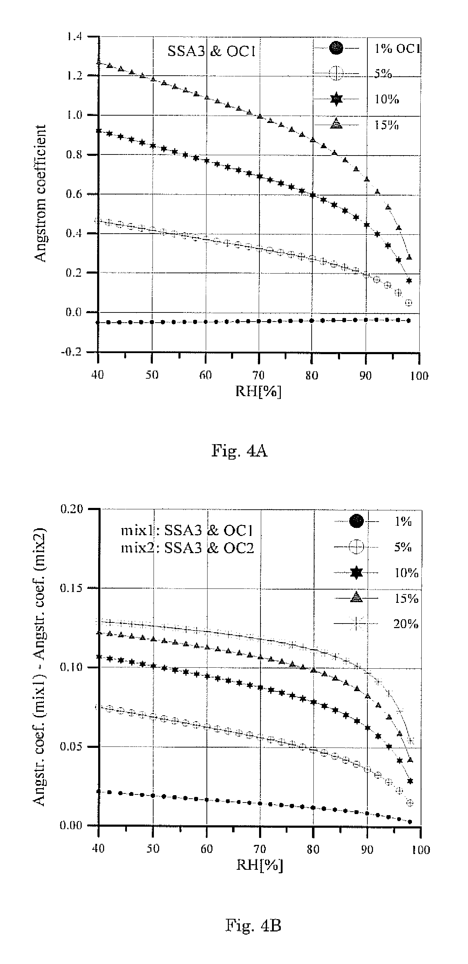

Figure 4A presents the Ångström coefficient values for a mixture composed of SSA3 and OC1. The different percentage contribution of OC1 is indicated by different symbols. The similar calculations were repeated also for OC2. For both types of organic carbon the same percentage contribution produces similar result. To illustrate this effect Figure 4B shows the difference between the Ångström coefficient values for both mixtures, containing OC1 and OC2. The Ångström coefficient values increase with the increase of OC; they decrease with the relative humidity increase. The similar behavior can be observed for a black carbon contribution.

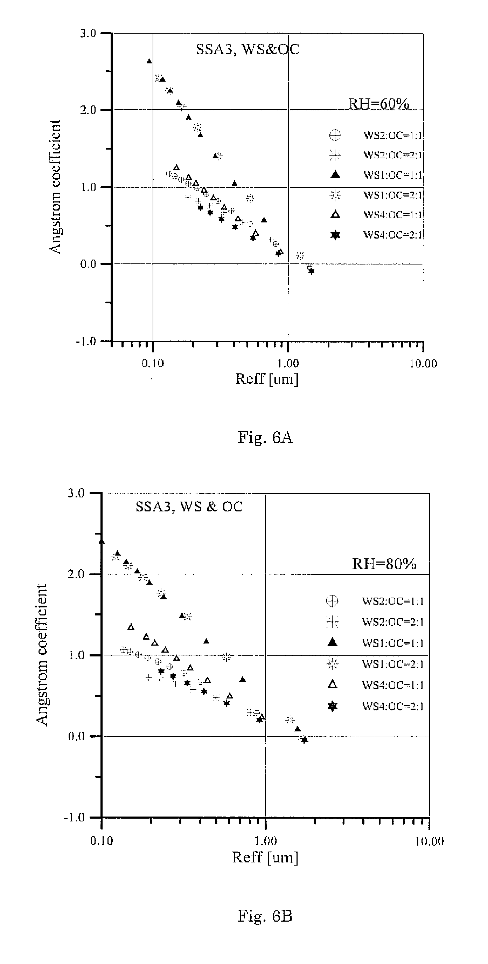

Figures 5 illustrates the changes in the Ångström coefficient values caused by changes in the composition of the aerosol mixture for relative humidity: RH=60%. Independently of the aerosol type, the mixture with higher contribution of organic carbon was characterized by the higher values of the Ångström coefficient. The aerosol mixture composed of sea-salt and WS and OC in equal proportions (WS:OC=1:1) give much higher values of the Ångström coefficient than the same aerosol components but mixed in a different ratio, i.e. WS:OC=2:1. The highest values are generated by the aerosol mixture consisting of fine particles WS1 and OC mixed in equal proportions. The lowest values are obtained for a mixture of OC and WS4 mixed in ratio 1:2. It becomes clear when the effective radius of these different mixtures is compared, see Figure 6.

Figure 6 demonstrates changes of the Ångström coefficient values versus the effective radius. Similarly, as it was for two component mixture (see Figure 9) there is no unique correspondence between Reff and the Ångström coefficient. The dryer conditions (Figure 6 A) cause that aerosol particles representing a mixture are smaller and the Ångström coefficient values are slightly higher than for more wet conditions (Figure 6B). It will be appreciated that deduction of a corresponding mathematical expression describing changes in the Ångström coefficient values of the aerosol mixture composed of sea-salts and two other components like WS and OC lies within ordinary skill of the artisan.

Figure 7 schematically demonstrates how the effective radius may change as a result of transition from dryer to wetter conditions or vice versa. The simulations are done for various mixtures, but the difference is always calculated for the same type of mixtures. Figure 7A illustrates the effect of transition from wet conditions (RH=80%) to dryer ones, i.e. RH=60% or RH=40%. In both cases the effective radius decreases, and the most significant difference is observed for the Ångström coefficients which not exceed 0.5. Figures 7B&C present similar effect but for the Ångström coefficients. The absolute difference between the Ångström coefficients estimated at two RH which differ of 20%, do not exceed 0.1. Transition from RH=40% to RH=80% causes more significant changes between the Ångström coefficient values do not exceed 0.2.

From the results presented in Figure 7 it is found that the Ångström coefficient can be regarded as an at least preliminary indicator of the atmospheric aerosol type in a mixture. Accordingly, as is demonstrated earlier, there is a general relationship between Reff and the Ångström coefficient. Usually, the larger values of Reff correspond to the lower values of the Ångström coefficient; the smaller Reff can be related to the higher Ångström coefficient. Each particle size range is characteristic for a given aerosol mixture. Thus, it is concluded that the Ångström coefficient could be used to define "domains" indicating the possible aerosol mixtures and finally, the aerosol type.

For example the Ångström coefficients lower than 0.5 would represent the maritime domain or the maritime aerosol type (see Fig. 8). The aerosol components would be any sea-salts with small contribution of anthropogenic salts like WS2 or WS4. It is possible that a small contribution of OC or BC would also be present. In that way there is some degree of freedom. In each case, the mixture that would give that best fit would be selected. Similarly, the Ångström coefficients in the range between 0.5 and 1.0 would represent the transition state from maritime to continental domain and can be called the mixed maritime-continental aerosol type. The Ångström coefficients between 1.0 and 1.5 would indicate for the continental aerosol type, and the Ångström coefficients higher than 1.5 would suggest the industrial aerosol type.

Since the Ångström coefficient is a weakly RH-dependent function, the domain ranges defined using its values will also not vary significantly with RH. Thus, this kind of domain classification is very practical. It can be applied as a first guess in the aerosol retrieval algorithms, independently of the ambient relative humidity value.

It will be appreciated that while specific embodiments of the invention have been described above, that the invention may be practiced otherwise than as described. In addition, isolated features discussed with reference to different figures may be combined.

**Claims**

1.  A method for determination of atmospheric aerosol type in an atmospheric aerosol mixture, comprising the steps of:

    - receiving results of spectral optical measurements of an aerosol mixture conceived to be identified;
    - determining a value of the Ångström coefficient based on the results of the spectral optical measurements;
    - calculating respective contributions of components in the aerosol mixture based on the Ångström coefficient and pre-calculated data thereby identifying an atmospheric aerosol mixture;
    - calculating effective radius of the identified atmospheric aerosol mixture;
    - verifying determined components of the aerosol mixture and estimation of their contribution using effective radius and Ångström coefficient.

2.  A method according to claim 1, wherein the spectral measurements comprise measurements of aerosol extinction or aerosol optical thickness.

3.  A method according to claim 1 or 2, wherein the pre-calculated data comprise values of the extinction coefficient, said values of the extinction coefficient being determined as functions of wavelengths, refractive indices and size distribution parameters.

**4.** A method according to any one of the preceding claims, further comprising the steps of measuring relative humidity.

**5.** A method according to claim 4, wherein the pre-calculated data are determined as functions of wavelengths, refractive indices and size distribution parameters and relative humidity.

Fig.1A

Fig. 1B

Fig. 2A

Fig. 2B

Fig. 3A

Fig. 3B

Fig. 4A

Fig. 4B

Fig. 5

Fig. 6A

Fig. 6B

Fig. 7A

Fig. 7B

Fig. 7C

Fig. 8

Europäisches
Patentamt
European
Patent Office
Office européen
des brevets

## EUROPEAN SEARCH REPORT

Application Number

EP 09 15 0751

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KUSMIERCZYK-MICHULEC J ET AL: "Empirical relationships between aerosol mass concentrations and Ångström parameter" GEOPHYSICAL RESEARCH LETTERS AMERICAN GEOPHYS. UNION USA, vol. 29, no. 7, 1 April 2002 (2002-04-01), pages 49-1, XP008111705 ISSN: 0094-8276 * the whole document * | 1-5 | INV. G01N21/53 |
| Y | MIAN CHIN ET AL: "Tropospheric aerosol optical thickness from the GOCART model and comparisons with satellite and Sun photometer measurements" JOURNAL OF THE ATMOSPHERIC SCIENCES AMERICAN METEOROL. SOC USA, vol. 59, no. 3, 1 February 2002 (2002-02-01), pages 461-483, XP002545684 ISSN: 0022-4928 * paragraph [0003]; table 2 * | 1-5 | |
| A | SATHEESH S K ET AL: "Aerosol optical depth, physical properties and radiative forcing over the Arabian Sea" METEOROLOGY AND ATMOSPHERIC PHYSICS, SPRINGER-VERLAG, VI, vol. 91, no. 1-4, 1 January 2006 (2006-01-01), pages 45-62, XP019378242 ISSN: 1436-5065 * paragraph [04.2] - paragraph [04.3] * | 1-5 | TECHNICAL FIELDS SEARCHED (IPC) G01N G01S |

-/--

The present search report has been drawn up for all claims

| Place of search | Date of completion of the search | Examiner |
|---|---|---|
| The Hague | 14 September 2009 | Rasmusson, Marcus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 09 15 0751

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | STEELE H M ET AL: "SIMULTATIONS OF THE ACCURACY IN RETRIEVING STRATOSPHERIC AEROSOL EFFECTIVE RADIUS, COMPOSITION, AND LOADING FROM INFRARED SPECTRAL TRANSMISSION MEASUREMENTS" APPLIED OPTICS, OSA, OPTICAL SOCIETY OF AMERICA, WASHINGTON, DC, vol. 45, no. 9, 20 March 2006 (2006-03-20), pages 2014-2027, XP001241246 ISSN: 0003-6935 * abstract * * paragraph [0002] * ----- | 1-5 | |
| A | HESS M ET AL: "Optical properties of aerosols and clouds: the software package OPAC" BULLETIN OF THE AMERICAN METEOROLOGICAL SOCIETY AMERICAN METEOROL. SOC USA, vol. 79, no. 5, May 1998 (1998-05), pages 831-844, XP002545685 ISSN: 0003-0007 * paragraphs [0004], [0005]; table 1 * ----- | 1-5 | |
| A | KUGEIKO M M ET AL: "Multiple regression equations for fractional concentrations of atmospheric aerosol and spectral extinction coefficients" JOURNAL OF APPLIED SPECTROSCOPY, KLUWER ACADEMIC PUBLISHERS-PLENUM PUBLISHERS, NE, vol. 73, no. 6, 1 November 2006 (2006-11-01), pages 904-910, XP019502346 ISSN: 1573-8647 * the whole document * ----- | 1-5 | TECHNICAL FIELDS SEARCHED (IPC) |

The present search report has been drawn up for all claims

| Place of search | Date of completion of the search | Examiner |
|---|---|---|
| The Hague | 14 September 2009 | Rasmusson, Marcus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Tang, I.N. ; H.R. Munkelwitz.** Water activities, densities, and refractive indices of aqueous sulfates and sodium nitrate droplets of atmospheric importance. *J. Geophys. Res.,* 1994, vol. 99 (D9), 18801-18808
- **Tang, I.** Chemical and size effects of hygroscopic aerosols on light scattering coefficients. *J. Geophys. Res.,* 1996, vol. 101 (D14), 19245-19250
- **Ångström, A.** On the atmospheric transmission of sun radiation and on dust in the air. *Geogr. Ann.,* 1929, vol. 11, 156-166
- **Seinfeld, J.H. ; S. N. Pandis.** Atmospheric Chemistry and Physics; from Air Pollution to Climate Change. John Wiley and Sons, 1998, 1326
- **Bohren, C.F. ; D.R.Huffman.** Absorption and Scattering of Light by Small Particles. John Wiley, 1983, 550